# EUROPEAN PATENT SPECIFICATION

(11) **EP 1 321 081 B1**
(45) Date of publication and mention of the grant of the patent: **29.06.2005**
(21) Application number: 02027982.4
(22) Date of filing: 13.12.2002
(51) Int. Cl.: A47J 31/06, A47J 31/44

(54) **Coffee machine**
Kaffeemaschine
Machine à café

(30) Priority: 21.12.2001 IT GE20010099
(43) Date of publication of application: 25.06.2003
(73) Proprietor: Bargiacchi, Roger Manuel, 1070 Bruxelles (BE)
(72) Inventor: Bargiacchi, Roger Manuel, 1070 Bruxelles (BE)
(74) Representative: Riccardi, Sergio

(56) References cited:
- EP-A- 0 496 688
- EP-A- 0 671 141
- US-A- 3 977 313
- US-A- 5 146 839
- US-A- 5 642 656

## Description

The present invention relates to machines for the production of infusions of coffee.

As is known, coffee machines comprise an upper chamber into which hot water is pumped under pressure and a lower, cylindrical housing in which is fixed a filter-holding basket filled with coffee. The hot water under pressure passes, by means of suitable delivery means, from the said chamber into the said filter-holding basket in order to produce the infusion of coffee. The said basket comprises a hand grip by means of which it is brought into a region located below the lower cylindrical housing, inserted by means of an upward movement into the said housing and then rotated through a certain angle in a manner such as to be further lifted and fixed to the machine. This rotation and lifting of the basket are made possible by a helical track produced In the said basket, which forces the basket of coffee against a rubber gasket which is then crushed and compressed in a manner such as to ensure a pressure fit. These known machines exhibit various disadvantages, among which is the need for the user to exercise a degree of force In order sufficiently to compress the sealing gasket and the gradual decline In the efficiency of the said gasket which is subjected, each time the machine is used, to substantial stresses by the user.

Coffee machines comprising sealing means for avoiding the user to exert a certain effort in order to operate the machine are known from documents EP-A-0 671 141, US-A-5 146 839 and US-A-3 977 313. However, the sealing means belonging to said machines, although solving the aforementioned disadvantages, are rather complicated and elaborated in their shape, not granting durability and cheapness at the same time.

It Is an object of the present invention to overcome the abovementioned disadvantages of the known coffee machines.

The present invention therefore relates to a coffee machine comprising an upper chamber fed with hot water under pressure and at least one lower housing having support elements for accommodating and supporting a basket provided with a filter; the upper chamber and the basket are separated by sealing means associated with a device accommodated in the said chamber for the delivery of water under pressure to the said basket; the said sealing means, in a phase of increasing pressure In the chamber, exercise a pressure on the said basket, sealing it In position, and the said device delivers water under pressure to the said filter while, in a phase of decreasing pressure in the said chamber, the said device interrupts the delivery of water to the said filter and the said means interrupts the pressure on the said basket, permitting the removal thereof from the associated housing when necessary, said sealing means being constituted by a gasket made from elastically deformable material, characterized by the features included in the characterizing portion of claim 1.

Further objects and advantages of the present invention will be better understood in the course of the description which follows, considered by way of example and without implying any limitation, and referring to the attached drawings, In which:
- Figure 1 illustrates a view In lateral elevation and partially in section of a coffee machine according to the present invention, comprising an upper chamber and a lower filter-holding basket accommodated in an associated housing;
- Figure 2 illustrates a view In lateral elevation and partially in section of the machine according to Figure 1 in a phase of delivery of water under pressure from the said chamber to the said filter-holding basket containing coffee;
- Figure 3 illustrates a plan view of a disc for the distribution of water under pressure from the upper chamber to the said filter-holding basket;
- Figure 4 illustrates a plan view, partially in section, of the housing for accommodating the said filter-holding basket; and
- Figure 5 illustrates a view, partially in section, of an escape or microloss valve provided in the circuit for feeding water under pressure to the said chamber.

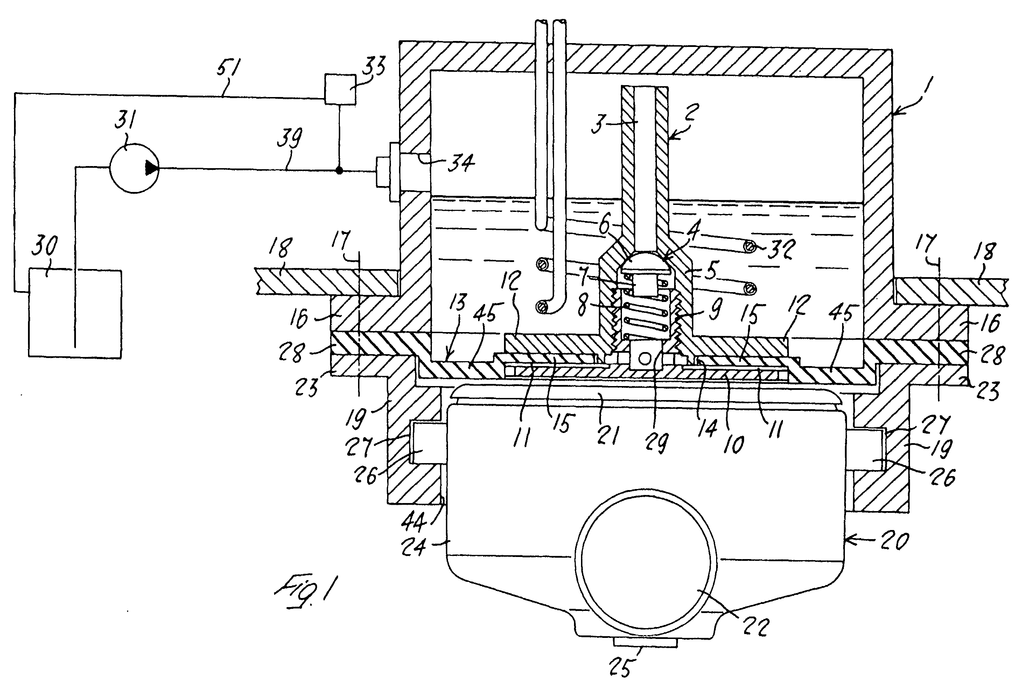

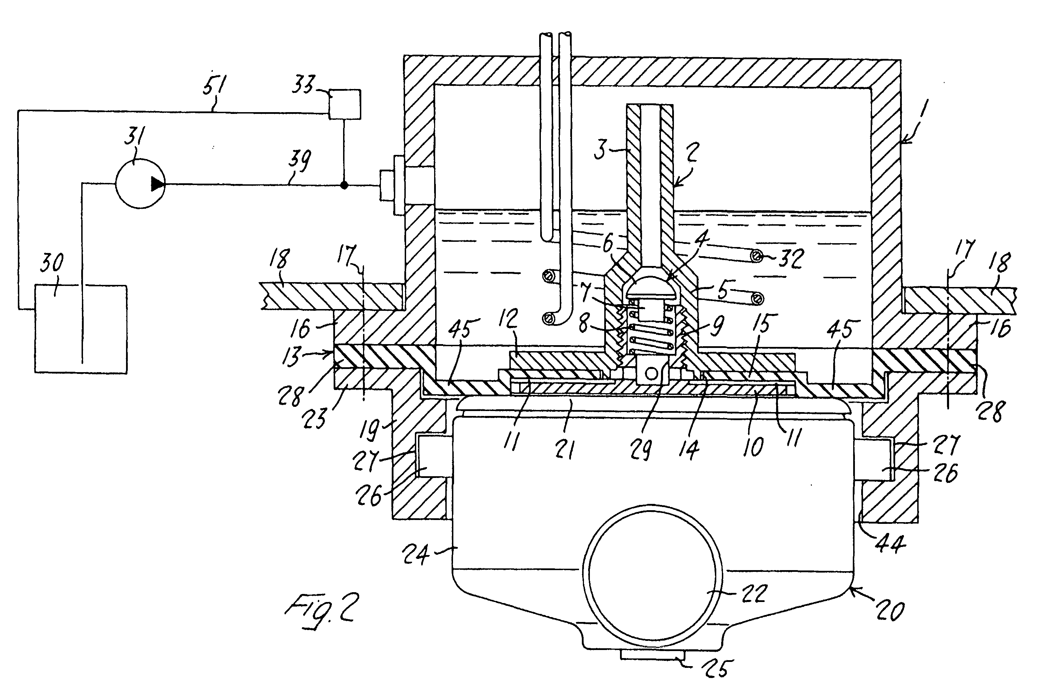

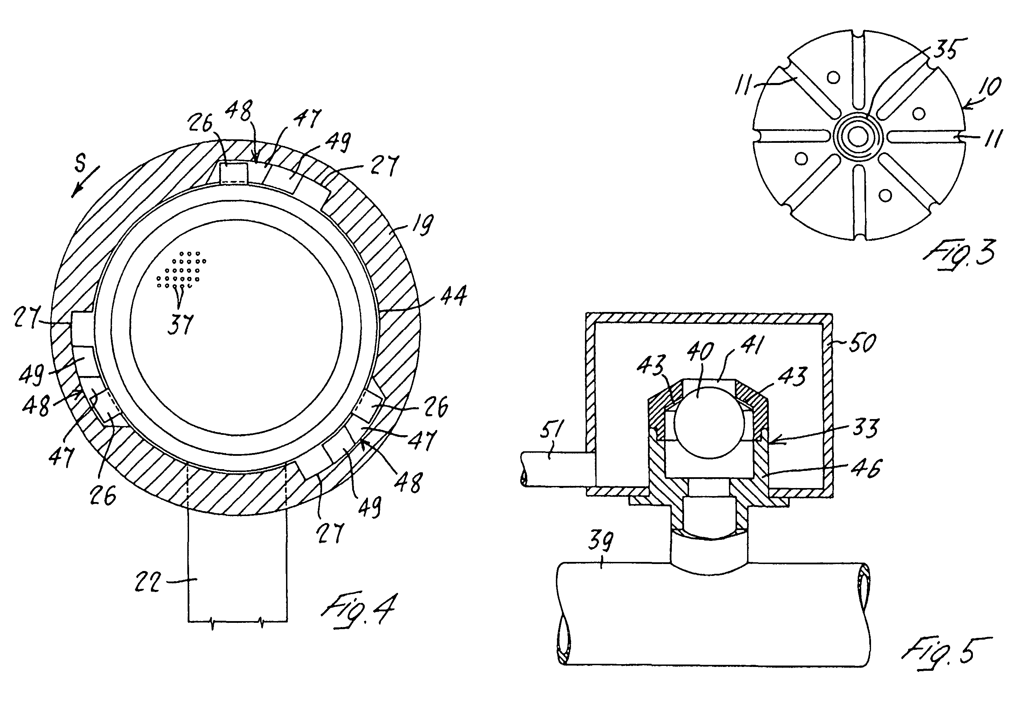

With reference to the drawings, and in particular to Figure 1, the numeral 1 designates a chamber into which water is introduced under pressure for the preparation of an infusion of coffee. Illustrated within the chamber 1 is a delivery device 2 for water under pressure, comprising a water inlet pipe 3 which is open at the top and closed at the bottom by a delivery valve 4 inserted in an associated seating 5. This seating 5 possesses, internally, a smooth upper portion and a grooved lower portion, while it is provided at the bottom with a base 12 of larger section, perforated centrally. This valve 4 comprises a shutter 6 and a stem 7 around which is fixed the first end of a compression spring 8, the other end of which Is fixed in an externally threaded cylindrical socket 9. This socket 9 Is screwed on to the lower threaded portion of the seating 5 and is provided at the base with a hole 29. Fixed to the lower portion of the said socket 9 is a disc 10, perforated centrally and provided radially with a number of ducts 11 for distributing the water under pressure arriving from the pipe 3 and hence from the valve 4. Between the said base 12 of the seating 5 and the said disc 11, provision is made for the insertion of the central portion 15 of a gasket 13 made from rubber or another elastically deformable material, and provided with a central hole 14. This gasket 13 further comprises an annular peripheral portion 28 by means of which it is fixed to a support structure 18 outside the chamber 1. This fixing takes place by means of pins 17, which engage the said peripheral portion 28 between two flanges: one flange 16 made below the chamber 1 and one flange 23 made above a housing 19 for accommodating a filter-holding basket 20. The said housing 19 has a substantially cylindrical section and is provided at the bottom with an aperture 44 for the insertion and removal of the said basket 20 and, in the internal walls, with three mutually equidistant flutings 27 (as can be better seen in Figure 4).

The filter-holding basket 20, in a known manner, comprises a cylindrical container 24 into which the coffee is introduced and onto which is inserted a filter 21 provided with a number of microperforations. Outside the walls of the said cylindrical container 24 are produced three mutually equidistant radial fins 26 (Figure 4): the said fins 26 are engaged, when tightened, into three associated horizontal sections 47 of three guides 48 produced within the flutings 27. On the lower portion of the filter-holding basket 20, finally, are shown a hand grip 22, which permits the said basket 20 to be inserted into and removed from the housing 19, and a lower outlet hole 25 for the infusion of coffee. Outside the chamber 1 is provided a feed circuit 39 for the hot water, the said circuit schematically comprising a water tank 30, a pump 31, an escape or microloss valve 33, whose function will be described below, and an inlet aperture 34 for letting the water into the said chamber 1. The abovementioned circuit is supplemented by a heater 32 (for example, a resistor), inserted into the interior of the upper chamber 1.

Figure 3 illustrates a plan view, which provides a better understanding of the shape of the disc 10 provided axially with a sealing ring 35, and the positioning of the radial distribution ducts 11 made on the upper surface. These ducts 11, as mentioned, distribute the water under pressure to the filter 21.

In Figure 4, it is possible to see how the said filter 21 is produced: it comprises a central zone 36 situated below the said disc 10 and provided with a number of microperforations 37 and a peripheral zone 38 upon which, as we shall see from the description of the mode of operation of the present machine, presses a portion 45 of the gasket 13 comprised between the peripheral portion 28 and the central portion 15 of the said gasket 13. As mentioned previously, three guides 48 for the insertion of the radial fins 26 of the basket are produced in the three flutings 27: the said guides 48 each comprise a first, inclined external section 49, on which each fin 26 slides, and a second, horizontal internal section 47, on which each fin 26 bears.

Figure 5 illustrates the escape or microloss valve 33. This valve 33 comprises a seating 46 which accommodates a ball 40 and which is provided with an upper aperture 41 and with a lower aperture 42. As can be seen, the upper portion of the said seating 46 is of frustoconical section and possesses notches 43 internally. When water runs under pressure in the circuit 39, the ball 40 is forced upwards in a manner such as to close the upper aperture 41, as shown in the figure. However, because of the notches 43, there will always be a small trickle of water under pressure which escapes from the aperture 41. Naturally, when there is no water moving under pressure in the circuit 39, the ball 40 falls in a manner such as to close the lower aperture 42. For the purpose of recovering the water of condensation which is inevitably created during the escape phases, the said valve 33 is accommodated within a jacket 50, from which the said water of condensation is returned to the tank 30 via an appropriate return pipe 51.

In order to understand the mode of operation of the present coffee machine, it is necessary to compare Figures 1, 2 and 4. The filter-holding basket 20, filled with coffee, is introduced from below into the interior of the housing 19 by means of insertion of the radial fins 26 into the associated flutings 27 of the said housing 19 and is rotated in the direction of the arrow S in Figure 4 in a manner such that the said fins 26 move over the inclined sections 49 of the guides 48, causing a lifting of the basket 20 until the final, horizontal sections 47 of the said guides 48 are reached; at this point, the pump 31 is actuated to send the water from the tank 30 via the inlet aperture 34 into the chamber 1; progressively, as the chamber 1 is filled, the pressure of the water on the elastically deformable gasket 13 increases, and therefore the portion 45 of the said gasket 13, falls until it comes into contact with the upper peripheral portion of the filter 21, as is clear from Figure 2. This fall is the result of an elastic deformation of the said portion 45 of the gasket 13, the central portion 15 and the peripheral portion 28 being locked in position, respectively, between the disc 10 and the base 12 of the seating and between the flanges 16 and 23. During this deformation of the gasket 13, the hot water continues to enter the chamber 1 and also the pipe 3 of the delivery device 2. The spring 8 of the delivery valve 4 is calibrated to be compressed at a higher pressure than that necessary to deform the gasket 13, and therefore when the said deformation is complete, and a certain pressure is reached in the chamber 1, the spring 8 compresses and the shutter 6 is lowered, opening the pipe 3; the hot water under pressure passes through the hole 29 in the cylindrical socket 9 and arrives axially on the disc 10, from which it is distributed radially onto the filter 20 by means of the ducts 11. At this point, the aperture 25 below the filter-holding basket 20 begins to produce the infusion of coffee.

When the production of the infusion of coffee has ended, the filter-holding basket 20 is removed by a rotary and downward movement, opposite to the previous movement. However, before the said basket 20 is removed, it is necessary for the device 2 to interrupt the delivery of water to the said basket 20, and for the gasket 13 to return to the configuration shown in Figure 1, ceasing to press or exert pressure on the filter 21. For this purpose, the microloss valve 33 enters operation: as mentioned previously, this valve, by means of the notches 43 with which it is provided, always guarantees a small trickle of water from its upper aperture 41, and thus, at the point at which the water suction pump 30 is switched off, the pressure within the chamber 1 begins to fall. By virtue of this reduction in pressure it is possible, first, for the spring 8 of the delivery valve 4 to return the shutter 6 to the initial closed position of the pipe 3, and secondly for the gasket 13 to be elastically restored from the position shown in Figure 2 to the position shown in Figure 1. At this point, the filter-holding basket 20 can be conveniently removed.

## Claims

1. A coffee machine comprising: an upper chamber (1) fed with hot water under pressure; at least one lower housing (19) having support elements (27, 48) for a basket (20) provided with a filter (21); sealing means (13) which separate the basket (20) from the chamber (1) and which are associated with a device (2) accommodated in said chamber (1) for the delivery of water under pressure to said basket (20), in which, in a phase of increasing pressure in the chamber (1), said sealing means (13) are capable of exercising a pressure on said basket (20), sealing it in position, and said device (2) is capable of delivering water under pressure to said filter (21) and, in a phase of decreasing pressure in said chamber (1), said device (2) is capable of interrupting the delivery of water to said filter (21) and said means (13) are capable of interrupting the pressure on said basket (20), permitting the removal thereof from the associated housing (19) when necessary, said sealing means being constituted by a gasket (13) made from elastically deformable material, **characterized in that** said gasket comprises a central portion (15), inserted into said delivery device (2), and provided with at least one through hole (14); a peripheral portion (28) fixed between two flanges (16, 23) for installing, respectively, said chamber (1) and said housing (19) on a support structure (18) and an intermediate portion (45) capable of exercising a pressure on a peripheral zone (38) of said filter (21).

2. The coffee machine according to Claim 1, **characterized in that** it comprises escape means (33) which permit said delivery device (2) to interrupt the water feed to said filter (21) and the intermediate portion (45) of said gasket (13) to discontinue the pressure on said peripheral zone (38) of the filter (21).

3. The coffee machine according to Claim 1, **characterized in that** said housing (19) comprises, on the internal lateral walls, flutings (27) in which are formed guides (48) in which are inserted and supported radial fins (26) produced laterally on said basket (20).

4. The coffee machine according to Claim 1, **characterized in that** said delivery device (2) comprises a substantially vertical pipe (3), closed at the bottom by a delivery valve (4) comprising elastic restoring means (8) capable of permitting the opening thereof at a pressure in the chamber (1) which is greater than the elastic deformation pressure of the intermediate portion (45) of the gasket (13).

5. The coffee machine according to Claim 1, **characterized in that** said valve (14) is accommodated in a cylindrical socket (9) provided below a through hole (29) and fixed in a removable manner in an associated seating (5).

6. The coffee machine according to Claim 1, **characterized in that** said delivery device (2) comprises, at the bottom, a disc (10) for distributing the water under pressure to the filter (21) of the basket (20).

7. The coffee machine according to Claim 1, **characterized in that** said disc (10) comprises, at the top, a number of radial ducts (11) for distributing the water under pressure arriving in the axial direction from said delivery valve (4).

8. The coffee machine according to Claim 1, **characterized in that** said seating (5) comprises, at the bottom, a base (12) of larger section interacting with said disc (10) to tighten the central portion of the gasket (13) provided with the through hole (14).

9. The coffee machine according to Claim 1, **characterized in that** said escape means comprise a ball-type microloss valve (33) disposed outside the chamber (1) in a hot water feed circuit (39).

10. The coffee machine according to Claim 10, **characterized in that** said valve (33) is enclosed within a jacket (50) for collecting the water of condensation.

## Patentansprüche

1. Kaffeemaschine mit einer oberen Kammer (1), der heißes Wasser unter Druck zugeführt wird, mit wenigstens einem unteren Gehäuse (19), das Stützelemente (27, 48) für einen mit einem Filter (21) versehenen Korb (20) aufweist, mit Dichtungsmitteln (13), die den Korb (20) von der Kammer (1) trennen und denen eine in der Kammer (1) angeordnete Vorrichtung (2) für die Zufuhr von Wasser unter Druck in den Korb (20) zugeordnet ist, wobei die Dichtungsmittel (13) in einer Phase ansteigenden Drucks in der Kammer (1) in der Lage sind, Druck auf den Korb (20) auszuüben und ihn in seiner Position abzudichten, und wobei die Vorrichtung (2) in der Lage ist, Wasser unter Druck zum Filter (21) zu liefern, sowie in einer Phase abnehmenden Drucks in der Kammer (1) in der Lage ist, den Zufluss von Wasser zum Filter (21) zu unterbrechen, wobei ferner die Dichtungsmittel (13) in der Lage sind, den Druck auf den Korb (20) zu unterbrechen, damit er vom zugeordneten Gehäuse (19) bei Bedarf entfernt werden kann, und die Dichtungsmittel aus einer Scheibendichtung (13) aus elastisch deformierbarem Material bestehen, **dadurch gekennzeichnet, dass** die Scheibendichtung (13) einen Abschnitt (15) aufweist, der in die Vorrichtung (2) eingesetzt ist und wenigstens ein Durchgangsloch (14) aufweist, wobei ein Umfangsabschnitt (28) zwischen zwei Flanschen (16, 23) bzw. zwischen der Kammer (1) und dem Gehäuse (19) auf einer Tragekonstruktion (18) fixiert ist sowie ein mittlerer Abschnitt (45) in der Lage ist, Druck auf einen Umfangsabschnitt (38) des Filters (21) auszuüben.

2. Kaffeemaschine nach Anspruch 1, **dadurch gekennzeichnet, dass** sie ein Auslassventil (33) aufweist, welches der Vorrichtung (2) ermöglicht, den Wasserzufluss zum Filter (21) zu unterbrechen sowie dem mittleren Abschnitt (45) des Dichtungsmittels (13) ermöglicht, den Druck auf den Umfangsabschnitt (38) des Filters (21) zu beenden.

3. Kaffeemaschine nach Anspruch 1, **dadurch gekennzeichnet, dass** das Gehäuse (19) innenseitig Stützelemente (27) aufweist, in denen Führungen (48) gebildet sind, in welche radiale Vorsprünge (26), die seitlich am Korb (20) angeordnet sind, eingeführt und gehalten werden.

4. Kaffeemaschine nach Anspruch 1, **dadurch gekennzeichnet, dass** die Vorrichtung (2) ein im Wesentliches vertikales Wassereinlassrohr (3) aufweist, das am Boden mit einem Zuführventil (4) verschließbar ist, wobei das Zuführventil (4) elastische Rückstellmittel (8) aufweist, die es erlauben, das Zuführventil (4) zu öffnen bei einem Druck in der Kammer (1), der größer ist als der elastische Deformationsdruck des mittleren Abschnittes (45) des Dichtungsmittels (13).

5. Kaffeemaschine nach Anspruch 1, **dadurch gekennzeichnet, dass** das Zuführventil (4) mit einem zylindrischen Einsatz (9) versehen ist, der sich durch ein Loch (29) erstreckt und lösbar in einer zugeordneten Ventilaufnahme (5) fixiert ist.

6. Kaffeemaschine nach Anspruch 1, **dadurch gekennzeichnet, dass** die Vorrichtung (2) bodenseitig eine Scheibe (10) zum Verteilen des Wassers unter Druck auf den Filter (21) des Korbes (20) aufweist.

7. Kaffeemaschine nach Anspruch 1, **dadurch gekennzeichnet, dass** die Scheibe (10) oberseitig eine Anzahl von radialen Kanälen (11) zum Verteilen des in axialer Richtung vom Zuführventil (4) ankommenden Wassers unter Druck aufweist.

8. Kaffeemaschine nach Anspruch 1, **dadurch gekennzeichnet, dass** die Ventilaufnahme (5) bodenseitig eine Grundplatte (12) mit größerem Durchmesser aufweist, die mit der Scheibe (10) zusammenwirkt, um den mit einem Durchgangsloch (14) versehenen zentralen Abschnitt des Dichtungsmittels (13) abzudichten.

9. Kaffeemaschine nach Anspruch 1, **dadurch gekennzeichnet, dass** die Auslassmittel ein Auslassventil (33) nach Art eines Kugelventils aufweisen, welches außerhalb der Kammer (1) in der Zuführleitung (39) angeordnet ist.

10. Kaffeemaschine nach Anspruch 9, **dadurch gekennzeichnet, dass** das Auslassventil (33) von einer Umhüllung (50) zum Sammeln von Kondenswasser umschlossen ist.

## Revendications

1. Machine à café comprenant : une chambre supérieure (1) alimentée en eau chaude sous pression ; au moins un logement inférieur (19) ayant des éléments supports (27, 48) pour un panier (20) équipé d'un filtre (21); des moyens d'étanchéité (13) qui séparent le panier (20) de la chambre (1) et qui sont associés à un dispositif (2) aménagé dans ladite chambre (1) pour l'alimentation d'eau sous pression pour ledit panier (20); tandis que, dans une phase d'augmentation de pression dans la chambre (1), lesdits moyens d'étanchéité (13) sont capables d'exercer une pression sur ledit panier (20), le fixant hermétiquement en place, et ledit dispositif (2) est capable d'alimenter en eau sous pression ledit filtre (21) et, dans une phase de baisse de pression dans ladite chambre (1), ledit dispositif (2) est capable d'interrompre l'alimentation en eau pour ledit filtre (21) et lesdits moyens (13) sont capable d'interrompre la pression exercée sur ledit panier (20), permettant l'enlèvement de celui-ci, par rapport au logement associé (19) si besoin est, lesdits moyens d'étanchéité étant constitués d'une garniture (13) en matériau déformable élastiquement, **caractérisée en ce que** ladite garniture comprend une partie centrale (15), insérée dans ledit dispositif d'alimentation (2), et pourvue d'au moins un trou traversant (14) ; une partie périphérique (28) fixée entre deux brides (16, 23) pour installation, respectivement, de ladite chambre (1) et dudit logement (19) sur une structure support (18) et une partie intermédiaire (45) capable d'exercer une pression sur une zone périphérique (38) dudit filtre (21).

2. Machine à café selon la revendication 1, **caractérisée en ce qu'**elle comprend des moyens d'échappement (33) qui permettent audit dispositif d'alimentation (2) d'interrompre l'alimentation en eau dudit filtre (21) et à la partie intermédiaire (45) de ladite garniture (13) d'interrompre la pression exercée sur ladite zone périphérique (38) du filtre (21).

3. Machine à café selon la revendication 1, **caractérisée en ce que** ledit logement (19) comprend, sur les parois latérales internes, des cannelures (27) dans lesquelles sont formés des guides (48) dans lesquels sont insérées et supportées des ailettes radiales (26) constituées latéralement sur ledit panier (20).

4. Machine à café selon la revendication 1, **caractérisée en ce que** ledit dispositif d'alimentation (2) comprend un tuyau sensiblement vertical (3), fermé au fond par une valve d'alimentation (4) comprenant des moyens de rappel élastiques (8) susceptibles de permettre l'ouverture de celle-ci à une certaine pression dans la chambre (1) supérieure à la pression de déformation élastique de la partie intermédiaire (45) de la garniture (13).

5. Machine à café selon la revendication 1, **caractérisée en ce que** ladite valve (14) est logée dans une douille cylindrique (9) prévue sous un trou traversant (29) et fixée de manière amovible dans un siège associé (5).

6. Machine à café selon la revendication 1, **caractérisée en ce que** ledit dispositif d'alimentation (2) comprend au fond un disque (10) servant à la distribution d'eau sous pression au filtre (21) du panier (20).

7. Machine à café selon la revendication 1, **caractérisée en ce que** ledit disque (10) comprend au sommet un certain nombre de conduits radiaux (11) pour distribuer l'eau sous pression arrivant dans le sens axial à partir de ladite valve d'alimentation (4).

8. Machine à café selon la revendication 1, **caractérisée en ce que** ledit siège (5) comprend, au fond, un socle (12) de section plus importante interagissant avec ledit disque (10) pour resserrer la partie centrale de la garniture (13) présentant le trou traversant (14).

9. Machine à café selon la revendication 1, **caractérisée en ce que** lesdits moyens d'échappement comprennent une valve à faible perte de type à bille (33) disposée à l'extérieur de la chambre (1) dans un circuit d'alimentation en eau chaude (39).

10. Machine à café selon la revendication 1, **caractérisée en ce que** ladite valve (33) est logée dans une chemise (50) pour recueillir l'eau de condensation.
